# EUROPEAN PATENT APPLICATION

(11) **EP 4 674 683 A1**
(43) Date of publication of application: **07.01.2026**
(21) Application number: 24186542.7
(22) Date of filing: 04.07.2024
(51) Int. Cl.: B60N 2/68, B60N 2/60, B60N 2/70, B60N 2/803, B60N 2/24, B64D 11/06

(54) **BACKREST FOR A PASSENGER SEAT**

(71) Applicant: Franz Kiel GmbH, 86720 Nördlingen (DE)
(72) Inventor: SMYKOWSKI, Jedrzej, Dabrówka 62-069 (PL); WIATROWSKI, Tomasz, Daszewice 61-160 (PL); MAGDZIAK, Lukasz, Wolsztyn 64-200 (PL); BURDAJEWICZ, Piotr, Nowy Tomysl 64-300 (PL)
(74) Representative: Schmid, Wolfgang

(57) **Abstract**

A backrest (2) for a passenger seat (1), in particular for a passenger seat (1) in a bus, train and the like, compres a frame (4) made of a metal material and an insert (5) made of a plastic material. The insert (5) is configured to improve the structural stiffness of the backrest (2).

## Description

The invention relates to a backrest for a passenger seat, in particular for a passenger seat in a bus, train and the like. The invention also refers to a passenger seat, in particular for a bus, train and the like having a seat cushion and a backrest.

Regarding the prior art, reference is made to EP 1 190 892 B1, DE 10 2004 003 080 A1, and DE 10 2008 030 169 A1.

The frames of these backrests consist of steel parts which are mostly welded together. The structural strength of the backrest is completely based on the structural strength of the frame itself. All additional accessories, e.g. a rear cover or plastic inserts, are only visual parts that do not have any significance regarding the stiffness and strength of the seat.

It is therefore an object of the present invention to create a backrest for a passenger seat, in particular for a passenger seat in a bus, train and the like, which has a higher stiffness and is easier to manufacture than the backrests of the prior art. A further object of the invention is to create a passenger seat, in particular for a bus, train and the like, which is easier to manufacture.

According to the invention, this object is solved by the features of claim 1.

According to the present invention the backrest for a passenger seat, in particular for a passenger seat in a bus, train and the like, comprises a frame made of a metal material and an insert made of a plastic material. The insert is configured to improve the structural stiffness of the backrest.

With the insert being configured to improve the structural stiffness of the backrest, the structural strength of the backrest and therefore of the passenger seat can be increased and at the same time weight and raw material consumption can be lowered.

Accordingly, the insert is designed to take a significant part in the stiffness of the passenger seat and a lack of this component would cause a test failure. In contrast, the backrest according to the invention has much better test results than conventional backrests.

Doe to the frame being made of a metal material and the insert made of a plastic material, the backrest according to the present invention has a composite or hybride frame design which is not only fully modular, but also saves production time and production costs. Furthermore, with the backrest according to the present invention, the carbon footprint of the complete passenger seat can be reduced. Still further, eco-friendly materials can be used thus making the backrest fully recyclable.

Furthermore, due to the combination of the frame made of a metal material and the insert made of a plastic material, welding is not necessary any more as is any cleaning after welding.

According to an advantageous embodiment of the present invention, the insert can comprise a rear cover and a supporting part for an upholstery. The rear cover and the supporting part for the upholstery can be specifically adapted to further improve the structural stiffness of the backrest.

Furthermore, according to another embodiment, the rear cover may comprise hooks which are in engagement with the frame. Such hooks are a very simple and reliable possibility to connect the rear cover firmly with the frame.

Similarly and in a further embodiment, the supporting part may comprise hooks which are in engagement with the frame. This allows the supporting part to be connected to a frame in a reliable and easy manner.

It can also be provided that the frame comprises two lateral consoles connected by an upper headrest frame part. Such a structure of the frame with two lateral consoles and an upper headrest frame part provides a high stiffness for the frame.

A further embodiment of the present invention may consist in the hooks of the rear cover and/or the supporting part being in engagement with the upper headrest frame part of the frame. Connecting the rear cover and/or the supporting part with the upper headrest frame part of the frame by means of the hooks allows a stable connection of those parts of the insert with the frame and, accordingly, lead to a further improvement of the structural stiffness of the backrest by means of the insert.

According to yet another embodiment of the invention, the rear cover may comprise ribs for supporting the lateral consoles of the frame. This is a further possibility to improve the connection of the insert and the frame thus improving the structural stiffness of the backrest by means of the insert.

To securely fix the supporting part to the rear cover, the supporting part can be connected to the rear cover by means of at least one screw. Screwing the supporting part to the rear cover provides a very stiff connection between these parts.

In a similar manner, to securely fix the supporting part to the frame, the supporting part can be connected to the frame by means of at least one screw. This not only connects the supporting part to the frame, but also the rear cover to the frame in case the rear cover is connected to the supporting part by means of the above mentioned screw.

A passenger seat, in particular for a bus, train and the like, which has a seat cushion and a backrest as referred to above, is stated in claim 10.

This passenger seat has all the above mentioned advantages of the backrest which is part of the passenger seat and, accordingly, can be produced in a more time and cost effective manner.

The present invention is described with reference to the accompanying drawings, in which certain embodiments of the invention are shown. This invention may, however, be embodied in many different forms and should not be construed as limited to the embodiments that are pictured and described herein. It will also be appreciated that the embodiments disclosed herein can be combined in any way and/or combination to provide many additional embodiments.

Unless otherwise defined, all technical and scientific terms that are used in this disclosure have the same meaning as commonly understood by one of ordinary skill in the art to which this invention belongs. The terminology used in the below description is for the purpose of describing particular embodiments only and is not intended to be limiting of the invention. As used in this disclosure, the singular forms "a", "an" and "the" are intended to include the plural forms as well, unless the context clearly indicates otherwise. In addition, it should be noted that terms such as "comprising", "having" or "with" do not exclude other features.

In the schematical figures of the drawings, elements that are functionally identical are denoted by the same reference labels.

In the drawings:
- Fig. 1: is a very schemativ view of a passenger seat according to the present invention;
- Fig. 2: is a perspective view of a backrest for a passenger seat according to the present invention;
- Fig. 3: is a view similar to fig. 2;

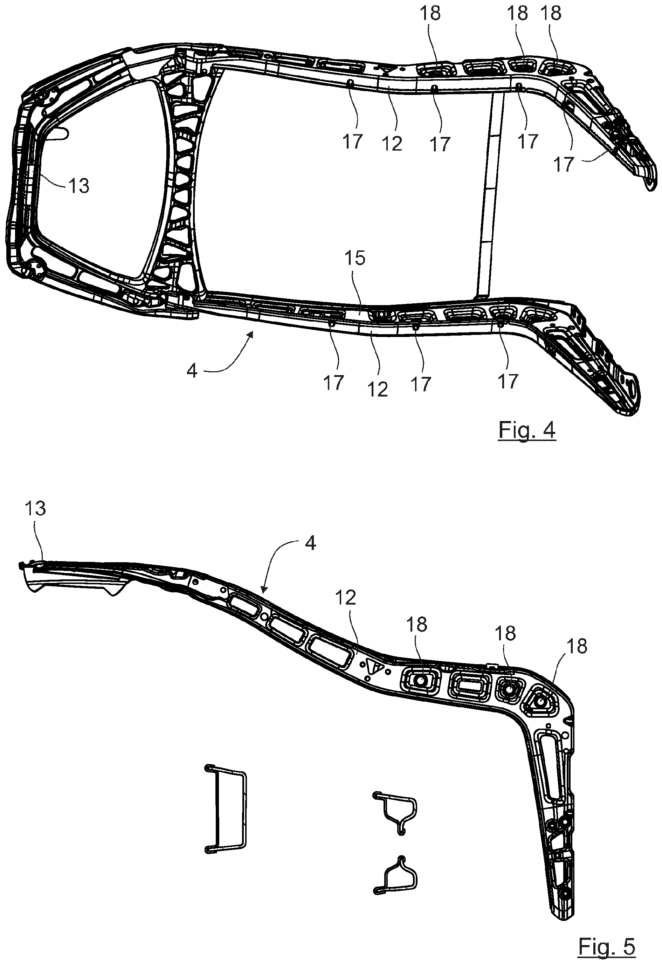

- Fig. 4: is a perspective view of a frame for the backrest according to the present invention;
- Fig. 5: is a side view of the frame of fig. 4;

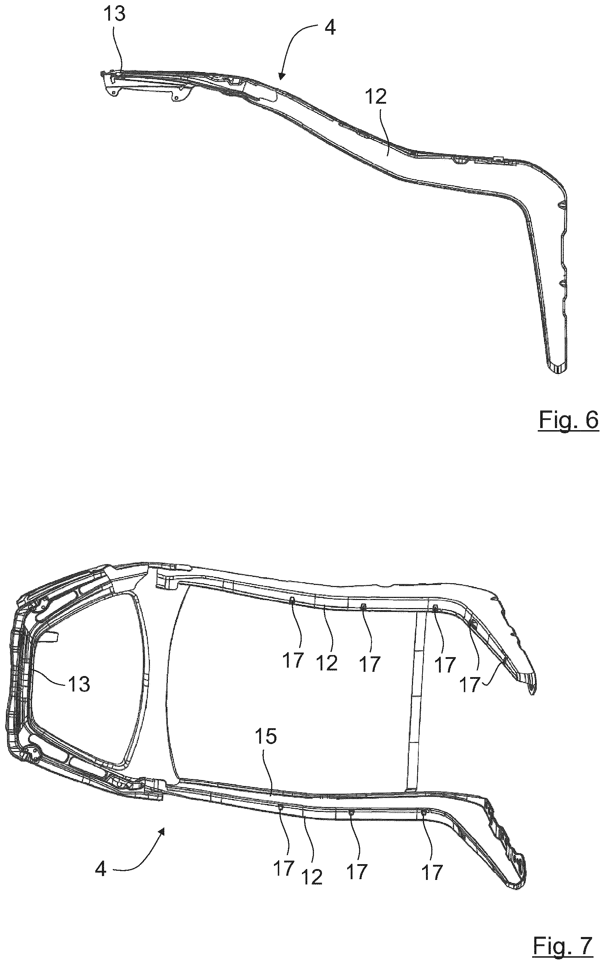

- Fig. 6: is a view similar to fig. 5;
- Fig. 7: is a view similar to fig. 4;
- Fig. 8: is an enlarged view of a part of the frame;
- Fig. 9: is a further enlarged view of a part of the frame;and
- Fig. 10: is a sectional view showing a detail of the frame for the backrest according to the present invention.

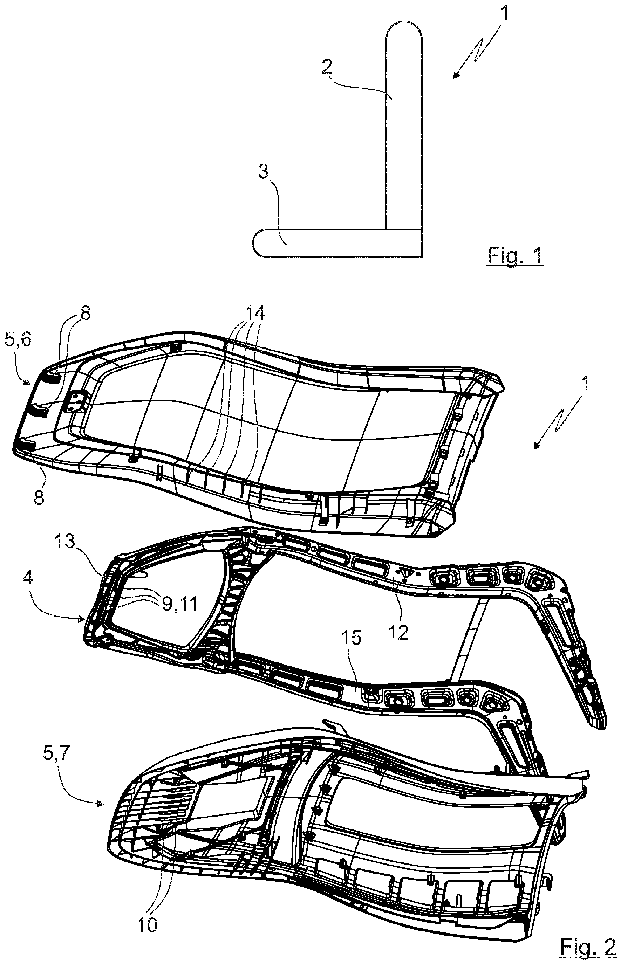

Fig. 1 is a very schematical view of a passenger seat 1, in particular a passenger seat 1 in a bus, a train and the like. In a manner known per se, the passenger seat 1 comprises a backrest 2 and a seat cushion 3.

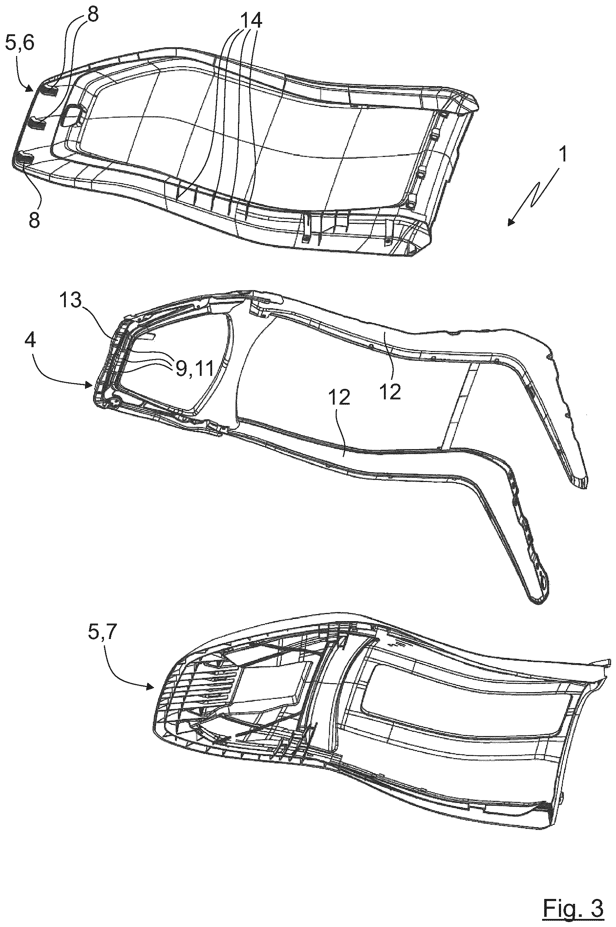

The backrest 2 is shown in figures 2 and 3 in a perspective view and in more detail. It comprises a frame 4 and an insert 5. The insert 5 comprises a rear cover 6 and a supporting part 7 for an upholstery not shown in the drawings. When attached to the frame 4, the rear cover 6 covers the back side or rear of the frame 4 and constitutes the outer shell of the passenger seat 1 on the back side thereof.

In the present case, the frame 4 is made of a metal material, in particular a steel material, while the insert 5 is made of a plastic material. Furthermore, the insert 5 is configured to improve the structural stiffness of the backrest 2.

In the present case, both the rear cover 6 as well as the supporting part 7 for the upholstery are configured to improve the structural stiffness of the backrest 2.

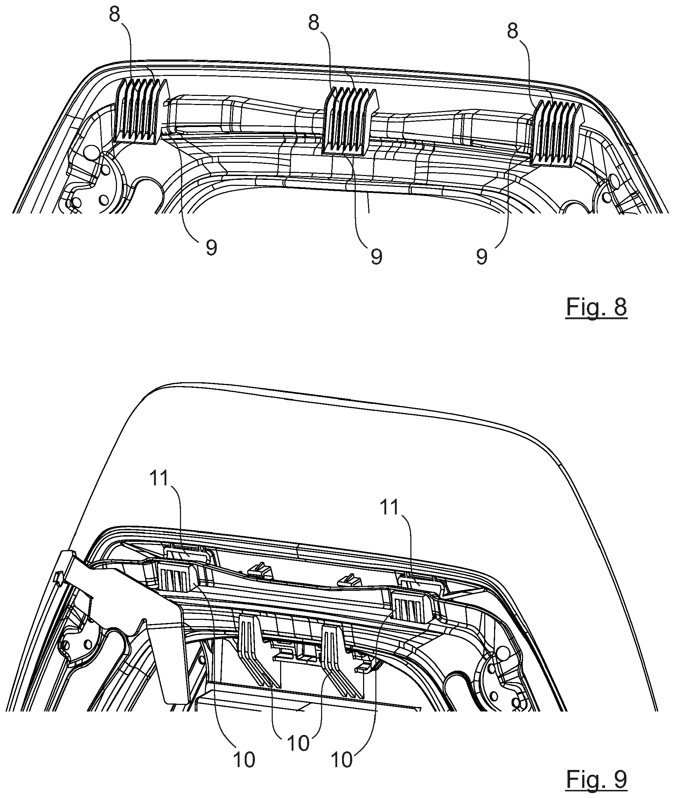

To attach the rear cover 6 to the frame 4, the rear cover 6 comprises hooks 8 which are in engagement with the frame 4. In the present case, the hooks 8 of the rear cover 6 are in engagement with recesses 9 in the frame 4. This can be seen in detail in fig. 8.

Similarly, to attach the supporting part 7 to the frame 4, the supporting part 7 comprises hooks 10 which are in engagement with the frame 4. In the present case, the hooks 10 of the supporting part 7 are in engagement with recesses 11 in the frame 4. This can be seen in detail in fig. 9. Although not clearly visible in fig. 2, the recesses 11 are on the other side of the frame 4 than the recesses 9.

In the present embodiment, as can be seen in figures 2 and 3, the frame 4 comprises two lateral consoles 12 connected by an upper headrest frame part 13. Furthermore, the hooks 8 of the rear cover 6 and/or the hooks 10 of the supporting part 7 are in engagement with the upper headrest frame part 13 of the frame 4. In other words, the recesses 9 and/or 11 are placed in the upper headrest frame part 13 of the frame 4.

The rear cover 6 comprises ribs 14 for supporting the lateral consoles 12 of the frame 4.

The supporting part 7 is connected to the rear cover 6 by means of at least one screw not shown in the drawings. Similarly, the supporting part 7 is connected to the frame 4 by means of at least one screw also not shown in the drawings.

In addition to the two lateral consoles 12, the frame 4 also comprises two support consoles 15 for supporting the lateral consoles 12. The lateral consoles 12, which can also be designated as the main consoles, are located at the exterior part of the frame 4, while the support consoles 15 are located at the internal part of the frame 4. The upper headrest frame part 13 is connected to the two lateral concoles 12 and/or the two support consoles 15, preferably to both, i.e. to the two lateral concoles 12 and to the two support consoles 15. Furthermore, the lateral concoles 12 and the support consoles 15 are connected to each other by means of crimping connections 16.

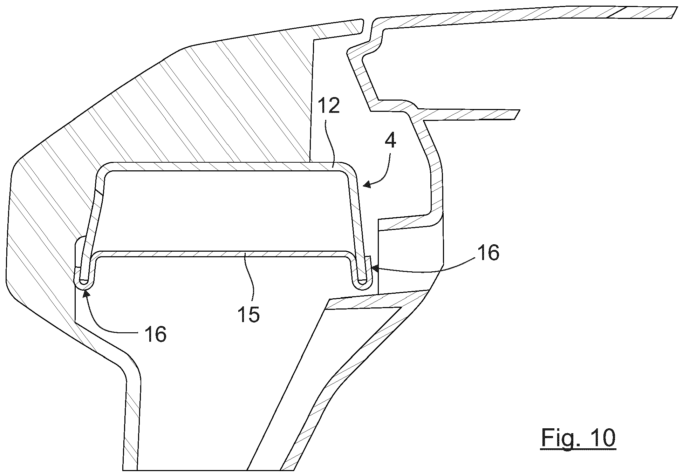

One of the crimping connections 16 is shown in detail in fig. 10. As can be seen, in the present case the material of the support console 15 is crimped or folded around the material of the lateral console 12. In principle, this could also be done the other way round, i.e. crimping or folding the material of the lateral console 12 around the material of the support console 15.

In the present case, the crimping connections 16 extend at least approximately around the full circumference of the lateral concoles 12 and the support consoles 15. In the present embodiment, the lateral concoles 12 and the support consoles 15 are also connected to each other by means of pre-shaped lock connections 17, which are only present in a few critical areas. In addition, the lateral concoles 12 and the support consoles 15 are connected to each other by means of plastic deformation of embossed hole flanges 18, which are also only present in a few critical areas.

## Claims

1. Backrest (2) for a passenger seat (1), in particular for a passenger seat (1) in a bus, train and the like, comprising a frame (4) made of a metal material and an insert (5) made of a plastic material, the insert (5) being configured to improve the structural stiffness of the backrest (2).

2. Backrest (2) according to claim 1,
**characterized in that**
the insert (5) comprises a rear cover (6) and a supporting part (7) for an upholstery.

3. Backrest (2) according to claim 1 or 2,
**characterized in that**
the rear cover (6) comprises hooks (8) which are in engagement with the frame (4).

4. Backrest (2) according to claim 1, 2 or 3,
**characterized in that**
the supporting part (7) comprises hooks (10) which are in engagement with the frame (4).

5. Backrest (2) according to any one of claims 1 to 4,
**characterized in that**
the frame (4) comprises two lateral consoles (12) connected by an upper headrest frame part (13).

6. Backrest (2) according to claim 3 or 4 and 5,
**characterized in that**
the hooks (8,10) of the rear cover (6) and/or the supporting part (7) are in engagement with the upper headrest frame part (13) of the frame (4).

7. Backrest (2) according to any one of claims 1 to 6,
**characterized in that**
the rear cover (6) comprises ribs (14) for supporting the lateral consoles (12) of the frame (4).

8. Backrest (2) according to any one of claims 1 to 7,
**characterized in that**
the supporting part (7) is connected to the rear cover (6) by means of at least one screw.

9. Backrest (2) according to any one of claims 1 to 8,
**characterized in that**
the supporting part (7) is connected to the frame (4) by means of at least one screw.

10. Passenger seat (1), in particular for a bus, train and the like having a seat cushion (3) and a backrest (2) according to one of claims 1 to 9.
